# EUROPÄISCHE PATENTSCHRIFT

(11) **EP 1 577 125 B1**
(45) Veröffentlichungstag und Bekanntmachung des Hinweises auf die Patenterteilung: **23.11.2011**
(21) Anmeldenummer: 05001781.3
(22) Anmeldetag: 28.01.2005
(51) Int. Cl.: B60G 17/02, B60G 15/06, B60G 11/48

(54) **Variables Federungssystem für ein Kraftfahrzeug mit mindestens einem Hauptfederelement und mindestens einem Dämpferelement**
Vehicle spring system having variable spring characteristics with at least one main spring element and at least one damper element
Système de ressorts possédant une caractéristique de ressort variable pour un véhicule avec au moins un élément de ressort principal et au moins un élément d'amortissement

(30) Priorität: 19.03.2004 DE 102004013559
(43) Veröffentlichungstag der Anmeldung: 21.09.2005
(73) Patentinhaber: AUDI AG, 85045 Ingolstadt (DE)
(72) Erfinder: Brandl, Hans Jürgen, 86706 Weichering (DE)
(74) Vertreter: Asch, Konrad

(56) Entgegenhaltungen:
- EP-A2- 0 794 100
- EP-A2- 1 449 687
- WO-A-2004/028883
- DE-A1- 19 935 865
- FR-A- 1 215 172
- FR-A- 1 289 653
- FR-A- 2 582 995
- FR-A- 2 840 256
- FR-A1- 2 647 061
- US-A- 5 700 026
- US-A- 5 996 978

## Beschreibung

Die Erfindung betrifft ein variables Federungssystem für ein Kraftfahrzeug mit mindestens einem Hauptfederelement und mindestens einem Dämpferelement gemäß der im Oberbegriff des Anspruches 1 angegebenen Art.

Bekanntlich hat das Federungssystem als Oberbegriff für das Zusammenwirken von Feder- und Dämpferelementen eine Reihe für das Gesamtverhalten des Fahrwerks höchst bedeutsame Aufgaben zu erfüllen. Zum einen soll das Federungssystem den Fahrzeugaufbau und damit vor allem auch die Insassen vor unangenehmen Hub-, Nick- und Wankschwingungen sowie vor Stößen schützen und damit zum mechanischen Schwingungskomfort beitragen. Weiterhin soll das Federungssystem auch für eine möglichst gleichmäßige Bodenhaftung der Räder als Voraussetzung für die zur Kurshaltung, zum Antreiben und Bremsen erforderliche Kraftübertragung zwischen Reifen und Fahrbahn sorgen, um so ein hohes Maß an Fahrsicherheit sicherzustellen.

Zur Charakterisierung des Federungssystem eines Kraftfahrzeugs werden in der Regel die Begriffe weiche/harte Federung verwendet. Die Auslegung des Federungssystems als weiche oder harte Federung steht hierbei in einem Zielkonflikt: Während für den "normalen" Fahrbetrieb eine weiche und somit komfortable Federung wünschenswert ist, ist für eine Autobahnfahrt hinsichtlich der geforderten Fahrsicherheit eine harte, sportliche Kennung des Federungssystems erstrebenswert.

Eine Variierung der Federungseigenschaften des Federungssystems mittels Verstellsysteme ist grundsätzlich bekannt. Hierbei nehmen dafür innerhalb des Federungssystems vorgesehene Verstellsysteme in der Regel Einfluss auf die Dämpfungseigenschaften des Dämpferelements, um somit eine weiche, komfortable oder harte, sportliche Kennung anzusteuern bzw. zu regeln. Eine sogenannte Niveauregulierung, insbesondere eine Tieferlegung des Kraftfahrzeugs bei schneller Autobahnfahrt zur Verringerung des Luftwiderstands und somit zur Reduzierung des Kraftstoffverbrauchs, ist mit denen auf die Dämpferelemente wirkenden Verstellsysteme nicht, oder nur unter großem technischen Aufwand realisierbar.

Aus der DE 199 35 865 A1 ist eine Vorrichtung zum Verändern der Federrate eines Federungssystems bekannt. Die Veränderung der Federrate des Federungssystems erfolgt hierbei über einen Anschlagpuffer, der mittels einer Verstelleinheit abhängig von definierten Fahrzuständen des Kraftfahrzeuges früher oder später in Wirkung gebracht werden kann. Als nachteilig erweist sich hierbei der Umstand, dass durch die alleinige Verstellung des Einsatzpunktes des Anschlagpuffers lediglich eine Veränderung der Federhärte des Federungssystems möglich ist. Eine gleichzeitige Niveauregulierung ist mit der offenbarten Vorrichtung ausgeschlossen.

Aus der nach veröffentlichten EP 1 449 687 A2 ist ein Fahrwerk zu entnehmen, dass mit mindestens einem Hauptfederelement und einem Dämpferelement ausgerüstet ist, wobei zusätzlich zu dem Hauptfederelement in Einfederrichtung eine Druckzusatzfeder vorhanden ist, deren Federkraft einstellbar ist.

In der US 5,996,978 A ist ein hydraulischer Dämpfer für ein Kraftfahrzeug offenbart, der eine Tieferlegun des Kraftfahrzeugs und eine Änderung der Federrate ermöglicht. Als nachteilig erweist sich hierbei, dass der offenbarte Dämpfer verhältnismäßig viel Bauraum benötigt.

Aus der ebenfalls nach veröffentlichten ES 2 166 277 ist ein gattungsmäßiges, sämtliche Merkmale des Oberbegriffes des Patentanspruches 1 aufweisendes Stabilisator- und Regelungssystem für die Aufhängung von Fahrzeugen bekannt geworden.

Der Erfindung liegt die Aufgabe zugrunde, ein Federungssystem für ein Kraftfahrzeug gemäß der im Oberbegriff des Anspruches 1 angegebenen Art derart weiterzubilden, dass unter Vermeidung der genannten Nachteile ausgehend von einer bestehenden weichen Grundfederauslegung nach Fahrerwunsch eine deutliche Federratenverhärtung mit gleichzeitiger Tieferlegung des Kraftfahrzeugs ermöglicht wird.

Diese Aufgabe wird durch die kennzeichnenden Merkmale 1 in Verbindung mit seinen Oberbegriffsmerkmalen gelöst. Die Unteransprüche bilden vorteilhafte Weiterbildungen der Erfindung aus. Der Erfindung liegt die Erkenntnis zugrunde, dass bei schneller Autobahnfahrt durch eine Erhöhung der Federrate in Verbindung mit einer Tieferlegung des Kraftfahrzeuges eine sichere und kraftstoffsparende Fahrweise gewährleistete wird. Ein weiterer Grund der Erhöhung der Federrate und gleichzeitigem Tieferlegen kann der Wunsch des Fahrers nach sehr sportlichen Fahreigenschaften bei kurvigen Fahrbahnverläufen unter bewusstem Verzicht auf Fahr-und Schwingungskomfort sein.

Hierfür weist das Hauptfedersystem für ein Kraftfahrzeug in bekannter Weise mindestens ein Hauptfederelement und mindestens ein Dämpferelement auf. Um eine progressive Federkennlinie bereitzustellen, umfasst das Hauptfederelement dabei neben einer Tragfeder zusätzlich in Einfederrichtung eine Druckzusatzfeder und in Ausfederrichtung eine Zuganschlagfeder.

Sowohl das Hauptfederelement als auch das Dämpferelement sind jeweils zwischen Radaufhängung und Fahrzeugaufbau angeordnet. Erfindungsgemäß ist dem Hauptfederelement zwischen Radaufhängung und Fahrzeugaufbau ein entgegenwirkendes zweites Federelement zugeordnet, das über ein Verstellsystem wahlweise in Wirkung bringbar ist. Mit Hilfe des zweiten Federelements ist es nunmehr möglich, eine gegen das Hauptfederelement wirkende Federkraft/Vorspannkraft aufzubringen. Diese wahlweise aufbringbare Vorspannkraft bewirkt zum einem ein definiertes Einfedern des Hauptfederelements und somit eine Tieferlegung des Kraftfahrzeugs und zum anderen einen vorzeitigen Eingriff der in Einfederrichtung vorhandenen Druckzusatzfeder, was zu der gewünschten Erhöhung der Federrate beim Einfedern führt. Auf eine einfache Art und Weise sind somit stark unterschiedliche Federungseigenschaften in ein und demselben Kraftfahrzeug einschließlich einer Niveauanpassung realisierbar.

Grundsätzlich erscheint eine gleichzeitige und gleich große Federratenverstellung an allen vier Rädern des Kraftfahrzeugs sinnvoll. Denkbar ist aber auch, dass eine unterschiedlich große Verstellung an Vorder- und Hinterachse fahrdynamische Vorteile bringt. Weiterhin erscheint auch die Kombination zwischen der beschriebenen Möglichkeit zur Veränderung der Federhärte mit einem Dämpferverstellsystem technisch sinnvoll, da bei deutlich geänderten Federraten auch eine Anpassung der Dämpfung wünschenswert ist.

Über das Verstellsystem ist die aus dem zweiten Federelement resultierende und gegen das Hauptfederelement wirkende Federkraft einstellbar. Zweckmäßigerweise ist hierdurch insbesondere eine Variierung zwischen zwei Betriebspunkten sinnvoll, nämlich einmal der Fall, dass das zweite Federelement vollkommen entspannt ist und somit keine gegen das Hauptfederelement wirkende Kraft ausübt, und zum anderen der Fall des definierten "Volleingriffs" des zweiten Federelements, um die entsprechende Tieferlegung und Erhöhung der Federhärte zu erzielen. Der definierte Volleingriff des zweiten Federelements ist dabei so auszulegen, dass in der maximalen Tiefstellung des Kraftfahrzeugs die in Einfederrichtung vorhandene Druckzusatzfeder des Hauptfederelements bereits im Eingriff ist und damit die erforderliche Erhöhung der Federrate beim Einfedern bewirkt.

Aus Sicherheitsgründen ist die beschriebene Erhöhung der Federrate des Federungssystem über die Verstelleinheit nur bei stehendem Fahrzeug möglich.

Um über das Verstellsystem auf das zweite Federelement einzuwirken, umfasst das Verstellsystem eine Antriebseinheit sowie zwischen Antriebseinheit und zweitem Federelement angeordnete Verbindungsmittel.

Zweckmäßigerweise können dabei die Verbindungsmittel, beispielsweise aus Mangel an Einbauraum oder aus Packagezwängen, umlenkbar ausgeführt sein.

Für die Antriebseinheit kommen sämtliche bekannten Antriebsarten in Frage. So kann es sich beispielsweise um einen Elektromotor handeln. Denkbar ist aber auch, dass die Antriebseinheit nach dem hydraulischen und/oder pneumatischen Prinzip arbeitet.

Auch die mechanische Verbindung zwischen Antriebseinheit und zweitem Federelement kann auf verschiedene Arten ausgeführt sein. In einer besonders einfachen Ausführungsform ist die mechanische Verbindung über eine Gewindespindel in Verbindung mit einer Seilverbindung realisiert.

Vorzugsweise ist das Verstellsystem über mindestens einen Sensor in Abhängigkeit verschiedener Einflussgrößen, insbesondere Verstellweg, Federkraft, Fahrzeuggeschwindigkeit oder dergleichen, steuer-/regelbar.

Die Zuordnung des zweiten Federelements zum Hauptfederelement innerhalb des Federungssystems kann auf verschiedene Arten erfolgen:

Gemäß einer ersten Ausführungsform ist das zweite Federelement parallel zum Hauptfederelement angeordnet. Die parallele Anordnung erweist sich als vorteilhaft, da sie einfach zu realisieren ist und einen günstigen Kraftfluss zwischen dem zweiten Federelement und dem Hauptfederelement bedingt.

Um eine einfache Montage zu gewährleisten, ist für die parallele Anordnung des zweiten Federelementes zum Hauptfederelement eine untere Anlenkung am Dämpferelement oder an der Radaufhängung und/oder eine obere Anlenkung am Fahrzeugaufbau vorgesehen. Über diese obere und/oder untere Anordnung ist nunmehr eine einfache Befestigung des zweiten Federelements möglich.

Nach einer zweiten Ausführungsform ist das zweite Federelement um das Dämpferelement angeordnet. Die Anordnung des zweiten Federelements um das Dämpferelement hat den Vorteil, dass für den Einbau des zweiten Federelements verhältnismäßig wenig Einbauraum benötigt wird.

Gemäß einer dritten Ausführungsform bilden das zweite Federelement und das Dämpferelement eine Baueinheit.

Zweckmäßigerweise sind das Hauptfederelement und das Dämpferelement als eine Baueinheit - Feder-Dämpfer-Einheit - und das zweite Federelement als eine kostengünstige Stahlfeder ausgebildet.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im Folgenden anhand der in der Zeichnung dargestellten Ausführungsbeispiele näher beschrieben. In der Beschreibung, in den Ansprüchen und in der Zeichnung werden die in der hinten angeführten Liste der Bezugszeichen verwendeten Begriffe und zugeordneten Bezugszeichen verwendet. Es zeigen:
- Fig. 1a: eine schematische Darstellung eines Federungssystem mit einem zugeordneten zweiten Federelement;
- Fig. 1b: das Federungssystem aus Fig. 1 mit vorgespanntem zweiten Federelement;
- Fig. 2: die Federkennlinie des Federungssystems aus Fig. 1a und 1b;
- Fig. 3: eine weitere Ausführungsform des Federungs- systems, und
- Fig. 4: die zugehörige Federkennlinie der Ausfüh- rungsform aus Fig. 3

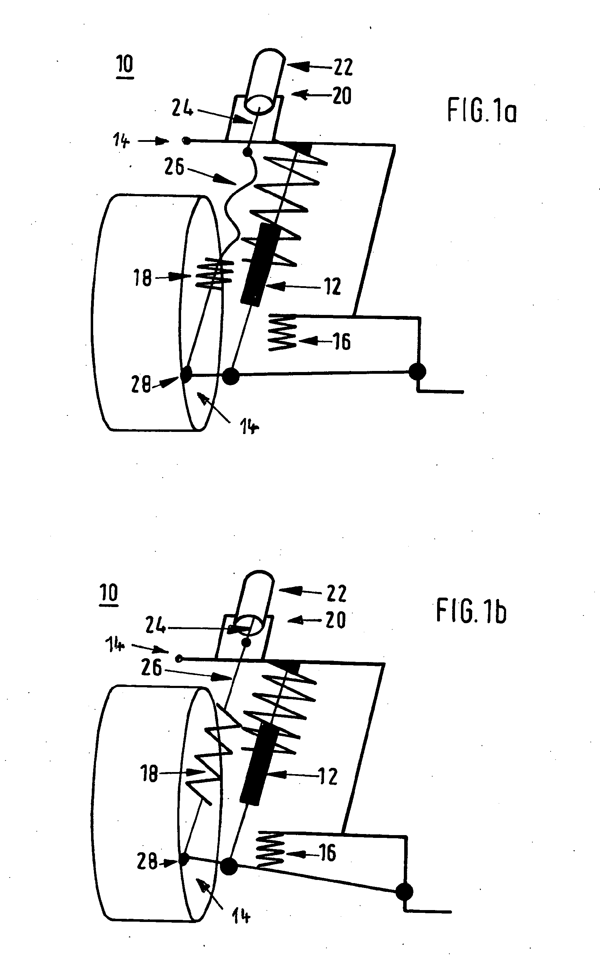

In Fig. 1a ist schematisch ein Federungssystem 10 eines nicht weiter dargestellten Kraftfahrzeugs dargestellt. Das Federungssystem 10 umfasst im Wesentlichen eine Feder-Dämpfer-Einheit 12, die in bekannter Weise zwischen Radaufhängung 14 und einem hier aus Gründen der Übersichtlichkeit nicht dargestellten Fahrzeugaufbau angeordnet ist.

Um eine progressive Federkennlinie des Federungssystems 10 zu gewährleisten, ist neben der Feder-Dämpfer-Einheit 12 in Einfederrichtung eine Druckzusatzfeder 16 vorhanden.

Der Feder-Dämpfer-Einheit 12 ist ein zweites Federelement 18 zugeordnet. Das zweite Federelement 18 ist als eine einfache Zusatz-Zugfeder in Form einer Stahlfeder ausgebildet und ist im Wesentlichen parallel zur Feder-Dämpfer-Einheit 12 angeordnet.

Das zweite Federelement 18 ist weiterhin mit einem Verstellsystem 20 zur Vorspannung des zweiten Federelements 18 verbunden. Das Verstellsystem 20 umfasst einen karosserieseitig fest gelagerten Elektromotor 22 sowie eine Gewindestange 24 und eine Seilverbindung 26, um eine Kraftübertragung zwischen Elektromotor 22 und zweiten Federelement 18 zu ermöglichen.

Für eine einfache Montage des zweiten Federelements 18 ist im Bereich um die Radaufhängung 14 an der Feder-Dämpfer-Einheit 12 eine untere Anlenkung 28 vorgesehen. Die Befestigung bzw. Lagerung des zweiten Federelements 18 am Fahrzeugaufbau ist nicht dargestellt. Entsprechend der Befestigung an der Feder-Dämpfer-Einheit 12 kann aber auch die Befestigung/Lagerung am Fahrzeugaufbau über eine karosserieseitige obere Anlenkung erfolgen. Hierbei ist in der oberen Anlenkung das zweite Federelement 18 verschiebbar zu lagern, um eine entsprechende Vorspannung des zweiten Federelements 18 über das Verstellsystem 20 zu ermöglichen.

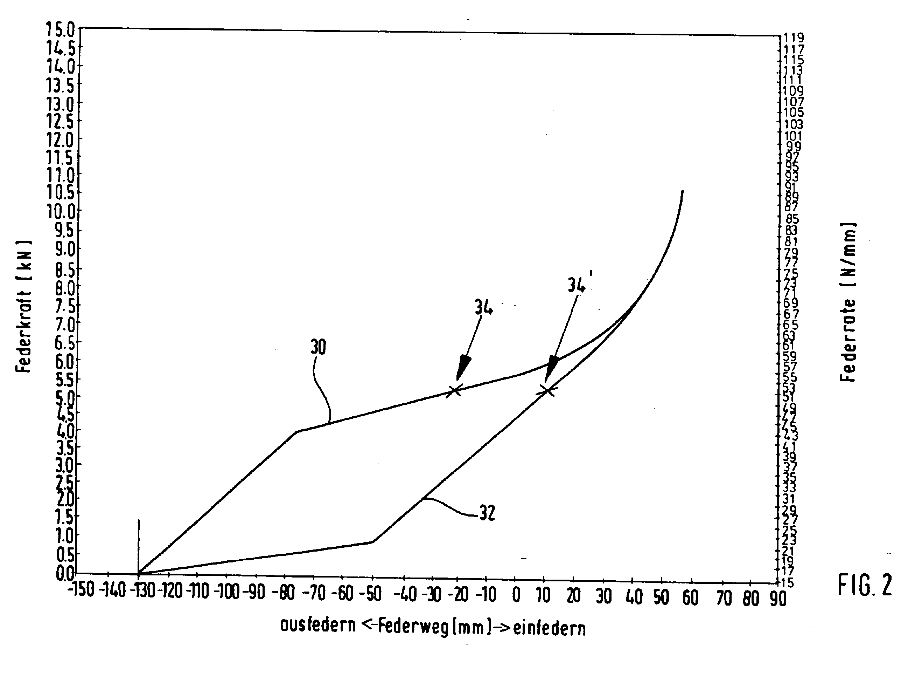

Bei dem in Fig. 1a dargestellten Zustand ist das zweite Federelement 18 nicht vorgespannt. Die Folge davon ist, dass die Haupt-Traglast wie bisher von der üblichen Federanordnung übernommen wird, die dem Zustand einer weichen Federrate entspricht (siehe auch Fig. 2).

Ist nun beispielsweise für eine vorgesehene Autobahnfahrt eine Tieferlegung und Erhöhung der Federrate des Federungssystems 10 gewünscht, so kann über das Verstellsystem 20 eine zugbeanspruchung auf das zweite Federelement 18 aufgebracht werden. Durch die Zugbeanspruchung des zweiten Federelements 18 wird eine achsintern gegen die Feder-Dämpfer-Einheit 12 wirkende definierte Vorspannkraft erzeugt, Fig. 1b. Die aufgebrachte definierte Vorspannkraft hat zwei Effekte, nämlich zum einen ein definiertes Einfedern des Federungssystems 10 und somit eine Tieferlegung des Kraftfahrzeugs und zum anderen einen vorzeitigen Eingriff der in Einfederrichtung vorhandenen Druckzusatzfeder 16, was zu der gewünschten Erhöhung der Federrate beim Einfedern führt. Das durch die Vorspannung bedingte Zusammendrücken der Feder-Dämpfer-Einheit 12 und der Druckzusatzfeder 16 ist in Fig. 1b nicht eingezeichnet.

Das in Fig. 2 dargestellte Federweg/Kraft-Diagramm mit einer ersten Kennlinie 30 und einer zweiten Kennlinie 32 verdeutlicht den beschriebenen Effekt. Während die erste Kennlinie die weiche Federrate des Federungssystems 10 ohne Vorspannung des zweiten Federelements 18 zeigt, ist mit der zweiten Kennlinie die nach Vorspannung des zweiten Federungselements 18 erhöhte Federrate dargestellt. Neben der erhöhten Federrate (= stärkere Steigung der zweiten Kennlinie 32) ist zudem auch die damit einhergehende Tieferlegung um 30 mm des Kraftfahrzeugs aus der entsprechenden Verschiebung des Betriebspunktes "Leerlast" 34, 34' zu erkennen.

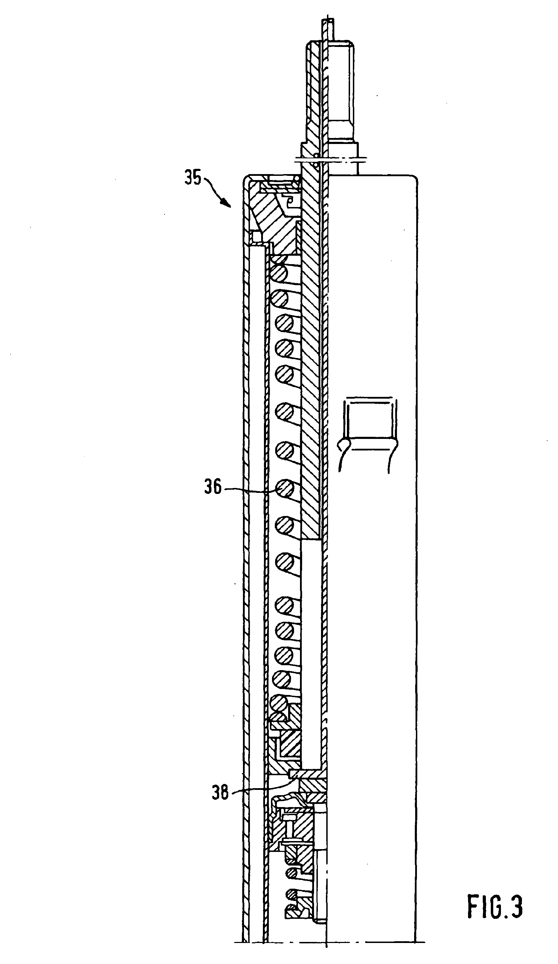

Ein weiteres Ausführungsbeispiel für die Anordnung des zweiten Federelements 18 ist in Fig. 3 gezeigt. Fig. 3 ist eine schematische Schnittdarstellung eines Dämpferelements 35. Das zweite Federelement 18 und das Dämpferelement bilden im vorliegenden Fall eine Baueinheit.

Als zweites Federelement 18 dient die im Dämpferelement 35 vorhandene Zuganschlagfeder 36. Hierfür ist die Zuganschlagfeder 36 verstellbar ausgeführt, d. h. der Einsatz der Zuganschlagfeder 36 ist variierbar. Die Verstellung des Einsatzes der Zuganschlagfeder 36 erfolgt beispielsweise über einen unterhalb der Zuganschlagfeder 36 befindlichen Mitnehmer 38, der wiederum mit dem Verstellsystem 20 in Wirkverbindung steht.

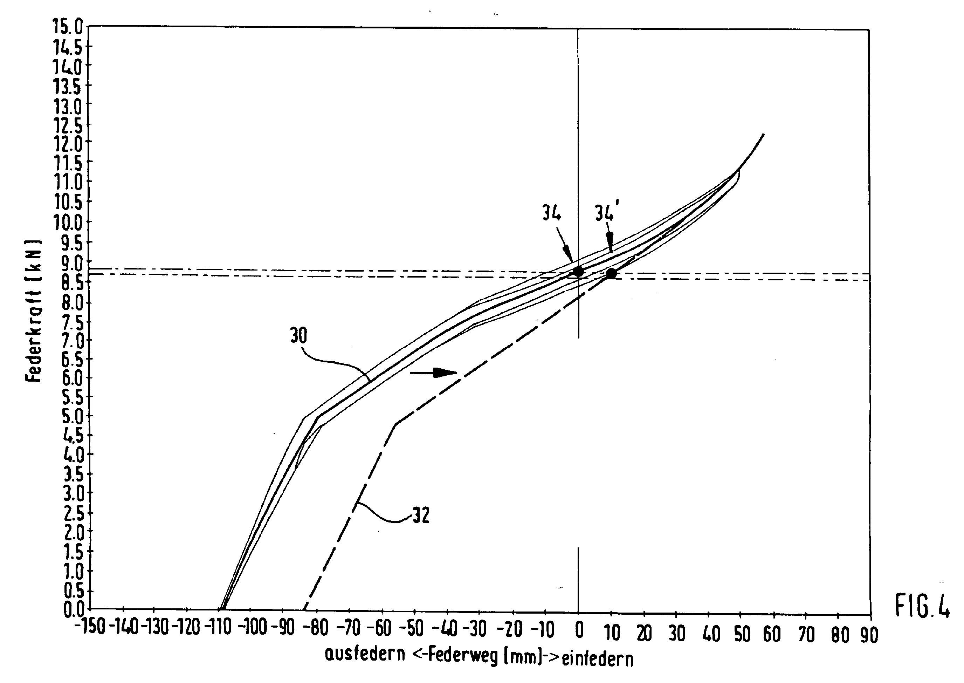

Die entsprechende Veränderung der Federkennung des Federungssystems 10 bei Verstellung des Einsatzes der Zuganschlagfeder 36 ist in bereits beschriebener Weise in Fig. 4 dargestellt.

### BEZUGSZEICHENLISTE

- 10: Federungssystem
- 12: Feder-Dämpfer-Einheit
- 14: Radaufhängung
- 16: Druckzusatzfeder
- 18: zweites Federelement
- 20: Verstellsystem
- 22: Antriebseinheit/Elektromotor
- 24: Gewindestange
- 26: Seilverbindung
- 28: untere Anlenkung
- 30: erste Kennlinie
- 32: zweite Kennlinie
- 34,34': Betriebspunkt Leerlage
- 35: Dämpferelement
- 36: Zuganschlagfeder im Dämpferelement
- 38: Mitnehmer

## Patentansprüche

1. Variables Federungssystem (10) für ein Kraftfahrzeug mit mindestens einem Hauptfederelement und mindestens einem Dämpferelement, wobei das Hauptfederelement mindestens eine Tragfeder, in Einfederrichtung eine Druckzusatzfeder (16) und in Ausfederrichtung gegebenenfalls eine Zuganschlagfeder umfasst, und das Hauptfederelement und das Dämpferelement jeweils zwischen Radaufhängung (14) und Fahrzeugaufbau angeordnet sind, wobei dem Hauptfederelement zwischen Radaufhängung (14) und Fahrzeugaufbau ein entgegenwirkendes zweites Federelement (18) zugeordnet ist und dieses zweite Federelement (18) über ein Verstellsystem (20) wahlweise in Wirkung bringbar ist, und das Verstellsystem (20) eine Antriebseinheit (22) sowie zwischen Antriebseinheit (22) und zweitem Federelement (18) angeordnete Verbindungsmittel (24, 26) umfasst, **dadurch gekennzeichnet, dass** die Antriebseinheit (22) karosserieseitig fest gelagert ist und die Verbindungsmittel (24, 26) eine Gewindespindel und eine Seilverbindung zum zweiten Federelement umfassen.

2. Federungssystem nach Anspruch 1, **dadurch gekennzeichnet, dass** über das Verstellsystem (20) die aus dem zweiten Federelement (18) resultierende Federkraft einstellbar ist.

3. Federungssystem nach Anspruch 1 oder 2, **dadurch gekennzeichnet, dass** die Verbindungsmittel (24, 26) umlenkbar ausgeführt sind.

4. Federungssystem nach einem der vorgenannten Ansprüche, **dadurch gekennzeichnet, dass** es sich um eine elektrische und/oder hydraulische und/oder pneumatische Antriebseinheit (22) handelt.

5. Federungssystem nach einem der vorgenannten Ansprüche, **dadurch gekennzeichnet, dass** das Verstellsystem (20) über mindestens einen Sensor in Abhängigkeit verschiedener Einflussgrößen, insbesondere Verstellweg, Federkraft, Fahrzeuggeschwindigkeit oder dergleichen, steuer-/regelbar ist.

6. Federungssystem nach einem der vorgenannten Ansprüche, **dadurch gekennzeichnet, dass** das Verstellsystem (20) nur bei stehendem Fahrzeug betätigbar ist.

7. Federungssystem nach einem der vorhergehenden Ansprüche, **dadurch gekennzeichnet, dass** das zweite Federelement (18) parallel zum Hauptfederelement angeordnet ist.

8. Federungssystem nach Anspruch 7, **dadurch gekennzeichnet, dass** für die parallele Anordnung des zweiten Federelements (18) zum Hauptfederelement eine untere Anlenkung (28) am Dämpferelement oder an der Radaufhängung (14) und/oder eine obere Anlenkung am Fahrzeugaufbau zur Befestigung des zweiten Federelements (18) vorhanden ist.

9. Federungssystem nach den Ansprüchen 1 bis 6, **dadurch gekennzeichnet, dass** das zweite Federelement (18) um das Dämpferelement angeordnet ist.

10. Federungssystem nach einem der vorhergehenden Ansprüche, **dadurch gekennzeichnet, dass** das Hauptfederelement und das Dämpferelement eine Baueinheit - Feder-Dämpfer-Einheit - (12) bilden.

11. Federungssystem nach einem der vorhergehenden Ansprüche, **dadurch gekennzeichnet, dass** das zweite Federelement (18) eine Stahlfeder ist.

## Claims

1. Variable suspension system (10) for a motor vehicle, having at least one main spring element and at least one damper element, wherein the main spring element comprises at least one supporting spring, an additional pressure spring (16) in the spring compression direction and, if appropriate, a rebound spring in the spring extension direction, and the main spring element and the damper element are each arranged between the wheel suspension (14) and the vehicle body, wherein a counteracting, second spring element (18) is assigned to the main spring element between the wheel suspension (14) and the vehicle body, and this second spring element (18) can be optionally operatively connected by means of an adjustment system (20), and the adjustment system (20) comprises a drive unit (22) as well as connecting means (24, 26) which are arranged between the drive unit (22) and the second spring element (18), **characterized in that** the drive unit (22) is fixedly mounted on the bodywork side and the connecting means (24, 26) comprise a threaded spindle and a cable connection to the second spring element.

2. Suspension system according to Claim 1, **characterized in that** the spring force which results from the second spring element (18) can be adjusted by means of the adjustment system (20).

3. Suspension system according to Claim 1 or 2, **characterized in that** the connecting means (24, 26) are of deflectable design.

4. Suspension system according to one of the abovementioned claims, **characterized in that** said spring system is an electrical and/or hydraulic and/or pneumatic drive unit (22).

5. Suspension system according to one of the abovementioned claims, **characterized in that** open-loop/closed-loop control of the adjustment system (20) can be performed by means of at least one sensor as a function of various influencing variables, in particular the adjustment travel, spring force, vehicle speed or the like.

6. Suspension system according to one of the abovementioned claims, **characterized in that** the adjustment system (20) can be activated only when the vehicle is stationary.

7. Suspension system according to one of the preceding claims, **characterized in that** the second spring element (18) is arranged parallel to the main spring element.

8. Suspension system according to Claim 7, **characterized in that**, for the parallel arrangement of the second spring element (18) with respect to the main spring element, a lower coupling (28) to the damper element or to the wheel suspension (14) and/or an upper coupling to the vehicle body are/is present for attaching the second spring element (18).

9. Suspension system according to Claims 1 to 6, **characterized in that** the second spring element (18) is arranged around the damper element.

10. Suspension system according to one of the preceding claims, **characterized in that** the main spring element and the damper element form one structural unit, a spring-damper unit (12).

11. Suspension system according to one of the preceding claims, **characterized in that** the second spring element (18) is a steel spring.

## Revendications

1. Système de suspension variable (10) pour un véhicule automobile avec au moins un élément de ressort principal et au moins un élément d'amortissement, dans lequel l'élément de ressort principal comprend au moins un ressort porteur, dans le sens de la compression du ressort au moins un ressort supplémentaire de compression (16) et dans le sens de la détente du ressort éventuellement un ressort de butée de traction, et l'élément de ressort principal et l'élément d'amortissement sont respectivement disposés entre la suspension de roue (14) et la carrosserie du véhicule, dans lequel un deuxième élément de ressort antagoniste (18) est associé à l'élément de ressort principal entre la suspension de roue (14) et la carrosserie du véhicule et ce deuxième élément de ressort (18) peut être mis en action au choix au moyen d'un système de réglage (20), et le système de réglage (20) comprend une unité d'entraînement (22) ainsi que des moyens de liaison (24, 26) disposés entre l'unité d'entraînement (22) et le deuxième élément de ressort (18), **caractérisé en ce que** l'unité d'entraînement (22) est montée de façon fixe côté carrosserie et les moyens de liaison (24, 26) comprennent une broche filetée et une liaison par câble avec le deuxième élément de ressort.

2. Système de suspension selon la revendication 1, **caractérisé en ce que** la force de ressort résultant du deuxième élément de ressort (18) est réglable au moyen du système de réglage (20).

3. Système de suspension selon la revendication 1 ou 2, **caractérisé en ce que** les moyens de liaison (24, 26) sont réalisés sous forme réversible.

4. Système de suspension selon l'une quelconque des revendications précédentes, **caractérisé en ce que** l'unité d'entraînement (22) est une unité électrique et/ou hydraulique et/ou pneumatique.

5. Système de suspension selon l'une quelconque des revendications précédentes, **caractérisé en ce que** le système de réglage (20) peut être commandé et/ou régulé au moyen d'au moins un capteur en fonction de différentes grandeurs d'influence, en particulier la course de réglage, la force du ressort, la vitesse du véhicule ou analogue.

6. Système de suspension selon l'une quelconque des revendications précédentes, **caractérisé en ce que** le système de réglage (20) ne peut être actionné qu'avec le véhicule à l'arrêt.

7. Système de suspension selon l'une quelconque des revendications précédentes, **caractérisé en ce que** le deuxième élément de ressort (18) est disposé parallèlement à l'élément de ressort principal.

8. Système de suspension selon la revendication 7, **caractérisé en ce que**, pour la disposition du deuxième élément de ressort (18) parallèlement à l'élément de ressort principal, il se trouve une articulation inférieure (28) sur l'élément d'amortissement ou sur la suspension de roue (14) et/ou une articulation supérieure sur la carrosserie du véhicule pour la fixation du deuxième élément de ressort (18).

9. Système de suspension selon l'une quelconque des revendications 1 à 6, **caractérisé en ce que** le deuxième élément de ressort (18) est disposé autour de l'élément d'amortissement.

10. Système de suspension selon l'une quelconque des revendications précédentes, **caractérisé en ce que** l'élément de ressort principal et l'élément d'amortissement forment une unité de construction - unité ressort-amortisseur - (12).

11. Système de suspension selon l'une quelconque des revendications précédentes, **caractérisé en ce que** le deuxième élément de ressort (18) est un ressort en acier.
